# EUROPÄISCHE PATENTSCHRIFT

(11) **EP 3 834 976 B1**
(45) Veröffentlichungstag und Bekanntmachung des Hinweises auf die Patenterteilung: **06.09.2023**
(21) Anmeldenummer: 20210152.3
(22) Anmeldetag: 27.11.2020
(51) Int. Cl.: B23D 47/04, B27B 5/065, B27B 31/06

(54) **WERKSTÜCKBEARBEITUNGSANLAGE INSBESONDERE PLATTENAUFTEILANLAGE, SOWIE VERFAHREN ZUM BETREIBEN EINER WERKSTÜCKBEARBEITUNGSANLAGE**
WORKPIECE PROCESSING PLANT, IN PARTICULAR PANEL CUTTING PLANT, AS WELL AS PROCESS FOR OPERATING A WORKPIECE PROCESSING PLANT
UNITÉ DE TRAITEMENT DE PIÈCES, EN PARTICULIER UNITÉ DE DÉCOUPE DE PANNEAUX, AINSI QUE PROCÉDÉ D'EXPLOITATION D'UNE UNITÉ DE TRAITEMENT DE PIÈCES

(30) Priorität: 11.12.2019 DE 102019133897
(43) Veröffentlichungstag der Anmeldung: 16.06.2021
(73) Patentinhaber: HOMAG Plattenaufteiltechnik GmbH, 75365 Calw (DE)
(72) Erfinder: Keim, Stefan, 75365 Calw (DE); Martynenko, Sergey, 71083 Herrenberg (DE)
(74) Vertreter: DREISS Patentanwälte PartG mbB

(56) Entgegenhaltungen:
- EP-A1- 2 251 131
- EP-A1- 2 832 507
- DE-A1-102015 206 824
- DE-A1-102017 122 868
- DE-B3-102006 027 013
- US-A- 5 002 108

## Beschreibung

Die Erfindung betrifft eine Werkstückbearbeitungsanlage insbesondere Plattenaufteilanlage, sowie ein Verfahren zum Betreiben einer Werkstückbearbeitungsanlage nach den Oberbegriffen der nebengeordneten Patentansprüche.

DE 10 2006 027013 B3 offenbart bereits eine Werkstückbearbeitungsanlage gemäß dem Oberbegriff von Anspruch 1. US 5 002 108 A offenbart ein Verfahren zum Kantenhobeln von Längs- und Stirnkanten von Werkstückplatten. Dabei wird eine Werkstückplatte einer Plattensäge zugeführt und mindestens eine Längskante wird gehobelt. EP 2 832 507 A1 offenbart ein Verfahren zum Zersägen von zumindest einem Werkstück mit einer Plattenaufteilanlage. EP 2 251 131 A1 offenbart eine Plattenaufteilanlage zum Zersägen von einem plattenförmigen und/oder plattenstapelförmigen Werkstück mit einer Sägelinie, entlang der zumindest eine Sägeeinrichtung zum Zersägen des Werkstücks verfahrbar ist. DE 10 2015 206824 A1 betrifft eine Plattenaufteilanlage zum Aufteilen von plattenförmigen Werkstücken, mit einem ersten Zuführtisch. DE 10 2017 122868 A1 offenbart eine Werkstückbearbeitungsanlage die einen Auflagebereich zum Auflegen mindestens eines Werkstücks umfasst, wobei das auf dem Auflagebereich liegende Werkstück mindestens in einer Längsrichtung des Auflagebereichs bewegt werden kann.

Bekannt sind Werkstückbearbeitungsanlagen in Form von Plattenaufteilsägen. Bei diesen erfolgt die Aufteilung der plattenförmigen Werkstücke in der Regel durch zwei Verfahrensschritte. Im erste Schritt wird von einem großformatigen Ausgangswerkstück ein Streifen durch einen sogenannten Längsschnitt abgetrennt. Dieser Streifen wird dann in einem zweiten Schritt durch einen sogenannten Querschnitt in einzelne Werkstücke aufgeteilt. Der Streifen oder Streifenstapel wird hierzu auf einen Zuführtisch gelegt, der eine Längsrichtung aufweist und an dem seitlich eine Anlageeinrichtung in Form eines sogenannten Winkellineals angeordnet ist. Der längliche Streifen bzw. das längliche Streifenpaket wird von einer Ausrichteinrichtung möglichst exakt parallel zu dem Winkellineal ausgerichtet. Anschließend wird ein Endbereich des Streifens bzw. Streifenstapel von einer Spannzange oder mehreren Spannzangen gegriffen und mittels eines Programmschiebers in Richtung eines Maschinentisches verschoben, wo er dann durch eine Sägeeinrichtung mittels der oben erwähnten Längsschnitte aufgeteilt wird.

Dabei kann es jedoch vorkommen, dass die Längsseiten der Streifen nicht exakt gerade sind, sondern leicht gekrümmt sind. Dies kann beispielsweise dann der Fall sein, wenn im Ausgangswerkstück Eigenspannungen vorhanden waren, die nach dem Längsschnitt, durch den der Streifen bzw. Streifenstapel hergestellt wurde, freigesetzt werden. Diese Freisetzung kann zu einer Krümmung ("Bananenform") des "entspannten" Streifens führen. In der Folge kann der Streifen nicht exakt am Winkellineal ausgerichtet werden, sondern ein Bereich eines Längsrands des Streifens bleibt vom Winkellineal beabstandet. Bei der Aufteilung mittels der oben erwähnten Querschnitte führt dies zum Entstehen von Winkel- und Maßabweichungen der aufgeteilten Werkstücke.

Aufgabe der vorliegenden Erfindung ist es, die Winkel- und Maßgenauigkeit aufgeteilter Werkstücke zu verbessern.

Diese Aufgabe wird durch eine Werkstückbearbeitungsanlage sowie ein Verfahren zum Betreiben einer Werkstückbearbeitungsanlage mit den Merkmalen der nebengeordneten Ansprüche gelöst. Vorteilhafte Weiterbildungen der Erfindung sind darüber hinaus in Unteransprüchen angegeben.

Bei der erfindungsgemäßen Werkstückbearbeitungsanlage ist es möglich, ein beispielsweise durch Eigenspannungen verformtes Werkstück exakt und zumindest im Wesentlichen ohne Abstand zu der seitlichen Anlageeinrichtung auszurichten, ohne dass es durch die Ausrichteinrichtung zu Beschädigungen des Werkstücks kommt, und das so ausgerichtete und "gerade gebogene" Werkstück aufzuteilen. Dabei versteht es sich, dass hier und nachfolgend auch dann, wenn der Singular "Werkstück" verwendet wird, hierunter nicht nur ein einzelnes Werkstück, sondern auch eine Mehrzahl von Werkstücken verstanden werden kann, die beispielsweise zu einem Stapel zusammengefügt sind.

Konkret wird eine Werkstückbearbeitungsanlage vorgeschlagen, die insbesondere eine Plattenaufteilanlage bzw. eine Plattenaufteilsäge sein kann. Diese kann entweder als Winkelanlage mit einer Längssäge und einer Quersäge ausgebildet sein, oder als Anlage mit nur einer Säge, bei der die Streifen nach dem Längsschnitt um 90° gedreht und dann wieder auf den Zuführtisch gelegt werden.

Die erfindungsgemäße Werkstückbearbeitungsanlage hat einen Zuführtisch mit einer Längsrichtung. Die Längsrichtung definiert jene Richtung, in der die Werkstücke bewegt werden, wenn sie auf dem Zuführtisch liegend einer Bearbeitungseinrichtung, beispielsweise einer Sägeeinrichtung, zugeführt werden. Zu der Werkstückbearbeitungsanlage gehört ferner eine seitlich vom Zuführtisch angeordnete Anlageeinrichtung, die dazu dient, die auf dem Zuführtisch liegenden Werkstücke auszurichten. Hierzu ist die Anlageeinrichtung exakt relativ zur Bearbeitungseinrichtung ausgerichtet, beispielsweise in einem Winkel von 90° zu einer Sägelinie.

Im Bereich des Zuführtisches ist mindestens eine Ausrichteinrichtung angeordnet, mit der mindestens ein Bereich eines auf dem Zuführtisch liegenden Werkstücks an der Anlageeinrichtung ausgerichtet werden kann. Erfindungsgemäß wird vorgeschlagen, dass die im Bereich des Zuführtisches angeordnete Ausrichteinrichtung mindestens eine Teil-Anpresseinrichtung umfasst, die abhängig von einer aktuellen Größe ansteuerbar ist, um das Werkstück in eine gewünschte bzw. vordefinierte, vorzugsweise gerade Form zu bringen. Durch die Ansteuerung der Teil-Anpresseinrichtung abhängig von einer aktuellen Größe ist eine besonders präzise Ausrichtung des Werkstücks an der Anlageeinrichtung und/oder eine gezielte Verformung des Werkstücks so, dass es gerade wird, möglich. Hierdurch wird die Qualität der bearbeiteten Werkstücke erheblich verbessert.

Besonders bevorzugt ist es, wenn die Ausrichteinrichtung zwei in Längsrichtung des Zuführtisches voneinander beabstandete Teil-Anpresseinrichtungen umfasst, die abhängig von der aktuellen Größe, insbesondere einer solchen aktuellen Größe, die eine Eigenschaft eines aktuell auf dem Zuführtisch liegenden Werkstücks charakterisiert, individuell ansteuerbar sind. Somit kann das Werkstück, in Längsrichtung des Zuführtisches gesehen, an mindestens zwei voneinander beabstandeten Stellen von der Ausrichteinrichtung beaufschlagt werden. Die Teil-Anpresseinrichtungen können dabei unterschiedlich am Werkstück angreifen, da sie individuell ansteuerbar sind.

Durch diese individuelle Ansteuerung können beispielsweise unterschiedliche Anpresskräfte für die unterschiedlichen Teil-Anpresseinrichtungen vorgegeben werden (Kraftsteuerung), und/oder unterschiedliche Endpositionen (Positionssteuerung). Auf diese Weise ist es möglich, ein gekrümmtes Werkstück zumindest bereichsweise über einen gewissen Längsbereich an der Anlageeinrichtung in Anlage zu bringen. Der Längenbereich liegt vorzugsweise in der Nähe von bzw. unmittelbar benachbart zu Spannzangen eines Programmschiebers. Insbesondere ist es auf diese Weise möglich, ein gekrümmtes Werkstück zumindest bereichsweise "zurecht zu biegen" und so nicht nur an einer Stelle, sondern mindestens über einen gewissen Längsbereich an der Anlageeinrichtung in Anlage zu bringen.

Bei einer Weiterbildung wird vorgeschlagen, dass die Werkstückbearbeitungsanlage eine Einrichtung zur Ermittlung einer Größe aufweist, die einen Rand eines auf dem Zuführtisch liegenden Werkstücks charakterisiert, und dass die Ansteuerung mindestens einer der Teil-Anpresseinrichtungen von der ermittelten Größe abhängt. Als eine Größe, die einen Rand des auf dem Zuführtisch liegenden Werkstücks charakterisiert, wird vorliegend eine geometrische Größe verstanden, beispielsweise eine Krümmung des Randes, ein Verlauf eines Abstands des Randes von einer Bezugsebene, o. ä.. Somit kann die Ansteuerung der Ausrichteinrichtung bzw. der Teil-Anpresseinrichtungen in Abhängigkeit von der Form des Rands des Werkstücks, also beispielsweise in Abhängigkeit von der Werkstückkrümmung, angepasst werden. Dies gestattet einerseits eine besonders präzise und andererseits eine besonders sanfte Anpressung des Werkstücks an die Anlageeinrichtung.

Bei einer Weiterbildung wird vorgeschlagen, dass die Einrichtung zur Ermittlung der Größe im Bereich der Anlageeinrichtung und/oder des Zuführtisches angeordnet ist. Dies gestattet eine besonders einfache Ermittlung der Werkstückkrümmung. Darüber hinaus kann diese Größe sowohl vor als auch während des Vorgangs des Ausrichtens bzw. Anpressens ermittelt werden, so dass der eigentliche Vorgang des Anpressens besonders präzise gesteuert oder sogar geregelt werden kann. Beispielsweise kann im Bereich der Anlageeinrichtung ein Sensor vorgesehen sein, oder es können mehrere Sensoren vorgesehen sein, die einen Abstand zwischen dem zur Anlageeinrichtung benachbarten Rand des Werkstücks und der Anlageeinrichtung erfassen. Besonders bevorzugt ist es dabei, wenn der Abstand einerseits eines Endbereichs des Werkstücks und andererseits ein Abstand in der Mitte (in Längsrichtung gesehen) des Werkstücks ermittelt wird. Bei einer weiteren Ausführung kann beispielweise im Bereich des Zuführtisches ein Sensor vorgesehen sein, oder es können mehrere Sensoren vorgesehen sein, die den Rand des Werkstücks bzw. seine Form bei seinem Quertransport zur Anlageeinrichtung erfassen.

Bei einer Weiterbildung wird vorgeschlagen, dass mindestens eine Teil-Anpresseinrichtung im Bereich eines Maschinentisches angeordnet ist. Dies hat den Vorteil, dass auch unmittelbar dort, wo das Werkstück bearbeitet wird, ein Ausrichten des Werkstücks an der Anlageeinrichtung erfolgen kann, wodurch nochmals die Winkel- und Maßgenauigkeit der hergestellten Werkstücke verbessert wird.

Bei einer Weiterbildung wird vorgeschlagen, dass mindestens eine Teil-Anpresseinrichtung einen von einer anderen Teil-Anpresseinrichtung unabhängigen Antrieb umfasst. Dies ist eine einfach zu realisierende Möglichkeit der gewünschten individuellen Ansteuerung der Teil-Anpresseinrichtungen. Der Antrieb, der hier gemeint ist, dient zur Erzeugung einer individuellen Anpresskraft, welche das Werkstück zur Anlageeinrichtung hin beaufschlagt.

Bei einer Weiterbildung wird vorgeschlagen, dass mindestens eine Teil-Anpresseinrichtung eine Nachgiebigkeitseinrichtung, beispielsweise in Form einer Federeinrichtung, aufweist, und dass mindestens eine Nachgiebigkeit - im Falle einer Federeinrichtung also beispielsweise eine Federeigenschaft (beispielsweise Steifigkeit und/oder Weichheit) - der Nachgiebigkeitseinrichtung gesteuert einstellbar ist. Vorzugsweise sind mindestens zwei Teil-Anpresseinrichtung mit jeweiligen Nachgiebigkeitseinrichtungen vorgesehen, deren Nachgiebigkeit individuell gesteuert einstellbar sind. Somit verfügt eine Teil-Anpresseinrichtung über eine "Nachgiebigkeit", die gezielt beispielsweise in Abhängigkeit von der Krümmung des Randes des Werkstücks, der Werkstückform und/oder von Materialeigenschaften eingestellt bzw. geändert werden kann. Beispielsweise kann es gewünscht sein, dass für eine optimale Ausrichtung des Werkstücks an der Anlageeinrichtung die zu der Bearbeitungseinrichtung näher liegenden Teil-Anpresseinrichtung(en) nachgiebiger (also weicher) sind als die von der Bearbeitungseinrichtung eher entfernt angeordneten Teil-Anpresseinrichtung(en).

Konkret wird ferner ein Verfahren zum Betreiben einer Werkstückbearbeitungsanlage der oben beschriebenen Art vorgeschlagen. Erfindungsgemäß wird vorgeschlagen, dass dieses Verfahren die folgenden Schritte umfasst: a. Ermitteln einer individuellen Ansteuergröße für mindestens eine Teil-Anpresseinrichtung abhängig von einer Größe, die eine Eigenschaft eines auf dem Zuführtisch liegenden Werkstücks charakterisiert (beispielsweise Werkstückform und/oder Form eines Randes des Werkstücks und/oder Material des Werkstücks, und/oder Materialeigenschaften wie Dichte, Nachgiebigkeit, Festigkeit, etc.); b. Ansteuern der Teil-Anpresseinrichtung mit der ermittelten Ansteuergröße.

Bei einer Weiterbildung wird vorgeschlagen, dass die Größe einen Rand und/oder ein Material und/oder Abmessungen eines auf dem Zuführtisch liegenden Werkstücks charakterisiert.

Bei einer Weiterbildung wird vorgeschlagen, dass die Ansteuergröße eine Anpresskraft und/oder eine Endposition und/oder eine Nachgiebigkeit der Teil-Anpresseinrichtung beeinflusst.

Bei einer Weiterbildung wird vorgeschlagen, dass es ferner folgende Schritte umfasst: c. Beaufschlagen des auf dem Zuführtisch liegenden Werkstücks mindestens in einem ersten Bereich mittels mindestens einer ersten Teil-Anpresseinrichtung gegen die Anlageeinrichtung, so dass der erste Bereich an der Anlageeinrichtung anliegt; d. Festlegen des ersten Bereichs des Werkstücks mindestens in einer Richtung quer zu einer Längsrichtung des Zuführtischs mittels einer Festlegeeinrichtung; e. Beaufschlagen eines von dem ersten Bereich in Längsrichtung des Zuführtisches gesehen entfernt liegenden zweiten Bereichs des Werkstücks mittels mindestens einer zweiten Teil-Anpresseinrichtung gegen die Anlageeinrichtung, so dass der zweite Bereich an der Anlageeinrichtung anliegt.

Die Festlegeeinrichtung kann beispielsweise eine oder mehrere Spannzangen eines Programmschiebers umfassen, die an einem endseitigen Rand des Werkstücks angreifen und diesen festhalten bzw. festlegen. Ein solcher Programmschieber wird beispielsweise bei einer Plattenaufteilanlage dazu verwendet, die aufzuteilenden Werkstücke bzw. Werkstückstapel, die auf dem Zuführtisch liegen, der Aufteileinrichtung, beispielsweise einer Aufteilsäge, zuzuführen und diese Werkstücke bzw. Werkstückstapel relativ zu einer Aufteillinie, beispielsweise einer Sägelinie, zu positionieren. Dabei ist es besonders bevorzugt, dass die zweite Teil-Anpresseinrichtung eine geringere Anpresskraft auf das Werkstück ausübt als die erste Teil-Anpresseinrichtung. Dies kann beispielsweise durch eine sequenzielle Ansteuerung der Ausrichteinrichtung erreicht werden, nämlich von dem ersten Bereich in Richtung zu dem zweiten Bereich. Möglich ist auch, dass die im ersten Bereich vorhandene Teil-Anpresseinrichtung eine geringere Nachgiebigkeit aufweist als die im zweiten Bereich vorhandene Teil-Anpresseinrichtung. Durch das vorgeschlagene Verfahren wird erreicht, dass das Werkstück über einen vergleichsweise großen Bereich (der bevorzugt in der Nähe zu bzw. unmittelbar bei der Festlegeeinrichtung liegt) an der Anlageeinrichtung anliegt, also "zurecht gebogen ist".

Bei einer Weiterbildung hierzu wird vorgeschlagen, dass der erste Bereich ein erster Endbereich und der zweite Bereich ein zu diesem entgegengesetzter zweiter Endbereich ist. In diesem Fall wird das gesamte Werkstück über seine gesamte Länge zumindest im Wesentlichen an die Anlageeinrichtung in Anlage gebracht, also "gerade gebogen", wodurch bei der anschließenden Bearbeitung ein bestmögliches Bearbeitungsergebnis erzielt werden kann.

Bei einer Weiterbildung hierzu wird vorgeschlagen, dass im Schritt c mindestens zwei erste Teil-Anpresseinrichtungen eingesetzt werden, und dass die Anpresskraft der zum ersten Endbereich näher liegenden ersten Teil-Anpresseinrichtung größer ist als die Anpresskraft der vom ersten Endbereich weiter weg liegenden ersten Teil-Anpresseinrichtung. Auch hierdurch wird auf besonders sanfte Art und Weise eine bestmögliche Anlage des Werkstücks an der Anlageeinrichtung erreicht.

Bei einer Weiterbildung wird vorgeschlagen, dass es nach dem Schritt e zusätzlich folgenden Schritt umfasst: f. Festlegen des zweiten Bereichs mindestens in einer Richtung quer zur Längsrichtung des Zuführtischs. Somit sind, nach dem Ausrichten, indem das Werkstück mittels der Mehrzahl von Teil-Anpresseinrichtungen in Anlage an die Anlageeinrichtung gebracht wurde, sowohl der erste Bereich als auch der zweite Bereich festgelegt, sodass eine sichere Bearbeitung des ausgerichteten Werkstücks erfolgen kann. Zur Festlegung des zweiten Bereichs kann beispielsweise bei einer Plattenaufteilanlage ein sogenannter Druckbalken verwendet werden, der im Bereich des Bearbeitungswerkzeugs, beispielsweise einer Aufteilsäge, vorhanden ist, und der das Werkstück zwischen sich und einem Maschinentisch verklemmen und hierdurch festlegen kann.

Bei einer Weiterbildung wird vorgeschlagen, dass zwischen den Schritten c und d die Teil-Anpresseinrichtungen das Werkstück freigegeben und das Werkstück in Längsrichtung des Zuführtisches in Richtung zu einer Bearbeitungseinrichtung bewegt wird. Das zumindest zum Teil ausgerichtete Werkstück kann auf diese Weise zuverlässig der Bearbeitungseinrichtung zugeführt werden.

Nachfolgend wird die Erfindung unter Bezugnahme auf die beigefügte Zeichnung erläutert. In der Zeichnung zeigen:
- Figur 1: eine Werkstückbearbeitungsanlage in Form einer Plattenaufteilanlage zu einem ersten Zeitpunkt während des Betriebs;
- Figuren 2-6: wesentliche Teile der Werkstückbearbeitungsanlage von Figur 1 zu weiteren Zeitpunkten während des Betriebs.

Eine Werkstückbearbeitungsanlage trägt in den Figuren insgesamt das Bezugszeichen 10. Sie ist vorliegend beispielhaft als Plattenaufteilanlage in Form einer Plattenaufteilsäge ausgebildet. Bei der Werkstückbearbeitungsanlage kann es sich beispielsweise um eine Quersäge einer Winkelanlage handeln, wobei die Längssäge in der Zeichnung nicht dargestellt ist. Die Werkstückbearbeitungsanlage 10 umfasst einen Zuführtisch 12, der in der Praxis beispielsweise aus einer Mehrzahl von Rollenschienen ausgebildet sein kann. Auf dem Zuführtisch 12 liegt ein streifenförmiges Werkstück 14. Seitlich von dem Zuführtisch 14 ist eine längliche und gerade Anlageeinrichtung 16 in Form eines Winkellineals angeordnet. Ferner gehört zu der Werkstückbearbeitungsanlage 10 eine Ausrichteinrichtung 18, die vorliegend insgesamt fünf Teil-Anpresseinrichtungen 18a-e umfasst. Wie weiter unten noch im Detail ausgeführt werden wird, dient die Ausrichteinrichtung 18 dazu, das auf dem Zuführtisch 12 liegende Werkstück 14 gegen die Anlageeinrichtung 16 zu beaufschlagen und an dieser auszurichten.

Die Werkstückbearbeitungsanlage 10 umfasst ferner einen portalartigen Programmschieber 20, an dem eine Mehrzahl von Spannzangen 22 vorhanden ist. Der Programmschieber 20 kann mit den Spannzangen 22 in Richtung eines strichpunktiert gezeichneten Pfeiles 24 bewegt werden, und auch in entgegengesetzter Richtung. Durch den Pfeil 24 wird eine zum Pfeil 24 parallele Längsrichtung des Zuführtisches 12 definiert. Sowohl der Programmschieber 20 als auch die Spannzangen 22 können motorisch bewegt bzw. betätigt werden, und zwar elektromotorisch und/oder pneumatisch. Die Spannzangen 22 können insbesondere pneumatisch geöffnet und geschlossen werden. Im geschlossenen Zustand können sie einen in Richtung des Pfeiles 24 gesehen hinteren Rand 25 des Werkstücks 14 greifen und festhalten.

An den Zuführtisch 12 schließt sich in Richtung des Pfeiles 24 gesehen ein Maschinentisch 26 an, der beispielsweise als Luftkissentisch ausgebildet sein kann. Unterhalb der Oberseite des Maschinentisches 26 ist ein Werkzeugwagen 28 (vorliegend beispielhaft also ein Sägewagen) angeordnet, der längst einer gestrichelt gezeichneten Aufteillinie 30 bewegt werden kann. An den Werkzeugwagen 28 sind für die Bearbeitung des Werkstücks 14 erforderliche Werkzeuge (nicht dargestellt) angeordnet, beispielsweise eine Hauptsäge und eine Vorritzsäge. Wiederum in Richtung des Pfeiles 24 gesehen schließt sich an den Maschinentisch 26 ein aus mehreren länglichen Segmenten bestehender Entnahmetisch 32 an, der ebenfalls als Luftkissentisch ausgebildet sein kann.

Im Bereich des Zuführtisches 12 ist eine Einrichtung 34 zur Ermittlung einer Größe angeordnet, die einen Rand, nämlich den zur Anlageeinrichtung 16 zugewandten seitlichen Rand 36, des Werkstücks 14 charakterisiert. Die Einrichtung 34 umfasst hierzu vorliegend beispielhaft vier in Richtung des Pfeiles 24 voneinander beabstandet angeordnete Sensoren 34a-d, bei denen es sich beispielsweise um Ultraschallsensoren, Infrarotsensoren, Lasersensoren oder Tastsensoren handeln kann, mit denen ein Abstand des Rands 36 von der Anlageeinrichtung 16 im Bereich des jeweiligen Sensors 34a-d erfasst werden kann. Die Größe, die den Rand 36 des Werkstücks 14 charakterisiert und die durch die Einrichtung 34 ermittelt wird, ist somit vorliegend beispielhaft ein Abstand an, in Richtung des Pfeiles 24 gesehen, unterschiedlichen Stellen der Anlageeinrichtung 16. Aus den ermittelten Abständen kann wiederum beispielsweise eine Krümmung des Randes 36 ermittelt werden, wenn dies gewünscht ist. Eine weitere mögliche (nicht dargestellte) Position der Sensoren ist im Zuführtisch 12. Dabei wird eine Krümmung des Randes 36 des Werkstücks 14 von unten bei der Querübergabe des Werkstücks 14 zur Anlageeinrichtung 16 erkannt.

Die Teil-Anpresseinrichtungen 18a-e umfassen jeweils einen eigenen Antrieb 38a-e. Die Antriebe 38a-e sind vorzugsweise pneumatisch, können aber auch beispielsweise elektrisch sein. Die Antriebe 38a-d dienen zum einen dazu, die Teil-Anpresseinrichtung 18a-e vertikal zu bewegen, sodass diese in einer ersten Betriebsstellung unterhalb von der Ebene des Zuführtisches 12 und in einer zweiten Betriebsstellung oberhalb von der Ebene des Zuführtisches 12 angeordnet sind. Zum anderen dienen die Antriebe 38a-d der Teil-Anpresseinrichtungen 18a-d dazu, die Teil-Anpresseinrichtungen 18a-d in einer Richtung orthogonal zur Längsrichtung des Zuführtischs 12, also orthogonal zum Pfeil 24, zu bewegen.

In der ersten Betriebsstellung wird somit die Bewegung des Werkstücks 14 beispielsweise in einer Richtung orthogonal zur Längsachse bzw. Richtung des Pfeiles 24 nicht behindert. In der zweiten Betriebsstellung dagegen können, wie weiter unten noch dargelegt werden wird, die Teil-Anpresseinrichtungen 18a-e an einem vom seitlichen Rand 36 des Werkstücks 14 entgegengesetzt angeordneten Rand 40 angreifen. Die Teil-Anpresseinrichtung 18e ist vorliegend am Werkzeugwagen 28 angeordnet. Deren Antrieb 38e dient daher nur zur Bewegung in vertikaler Richtung, nicht jedoch in seitlicher Richtung. Die Bewegung in seitlicher Richtung wird durch eine Bewegung des Werkzeugwagens 28 längst zur Aufteillinie 30 ermöglicht. Bei einer alternativen Ausführungsform kann die Teil-Anpresseinrichtung 18e oberhalb vom Maschinentisch 26 angeordnet sein, und dort kann dann der eigene Antrieb 38e angeordnet sein.

Die Teil-Anpresseinrichtungen 18a-d verfügen ferner jeweils über eine Nachgiebigkeitseinrichtung in Form einer Federeinrichtung 42a-d, und alle Teil-Anpresseinrichtungen 18a-e verfügen schließlich noch über ein Anpresselement 44a-e. Die Anpresselemente 44a-e können beispielsweise flächige oder zylinderförmige Elemente mit einer Kunststoff- oder Gummibeschichtung sein, die die von den Teil-Anpresseinrichtungen 18a-e auf den Rand 40 des Werkstücks 14 ausgeübte Kraft möglichst gut verteilen, um Beschädigungen des Rands 40 zu vermeiden. Die zwischen den Antrieben 38a-d und den Anpresselementen 44a-d vorhandene jeweilige Federeinrichtung 42a-d wird bevorzugt als Luftfeder ausgeführt, beispielsweise in Form eines Pneumatikzylinders.

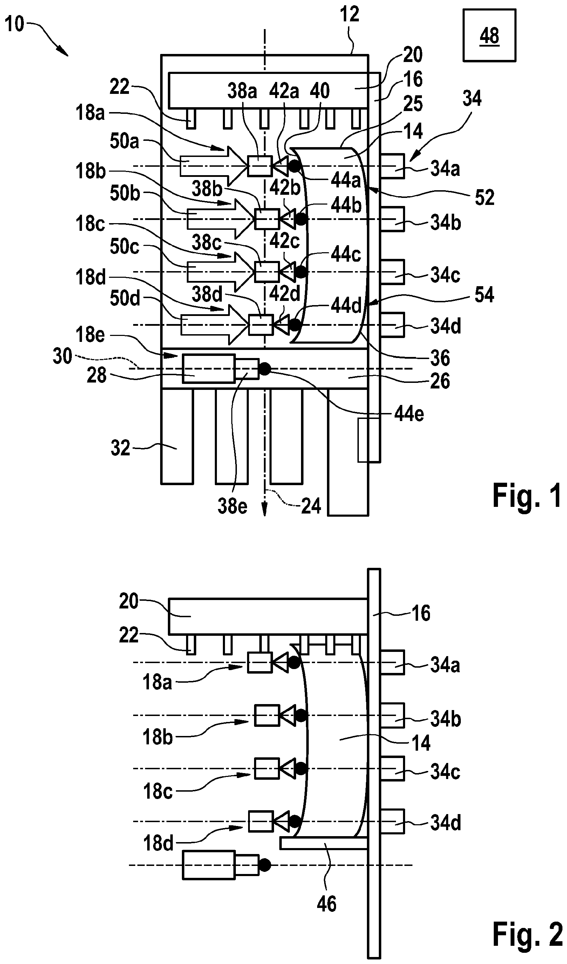

Wie lediglich aus Figur 2 ersichtlich ist, gehört zu der Werkstückbearbeitungsanlage 10 auch ein vertikal beweglicher Ausrichtanschlag 46, der im Übergangsbereich zwischen Zuführtisch 12 und Maschinentisch 26 angeordnet ist. Die Funktion dieses Ausrichtanschlags 46 wird weiter unten im Detail erläutert werden.

Zu der Werkstückbearbeitungsanlage 10 gehört schließlich auch noch eine Steuer- und Regeleinrichtung 48. Diese kann beispielsweise einen PC mit einem Mikroprozessor und einem Speicher umfassen, auf dem Programmcode abgespeichert ist, der zur Ausführung vorgegebener Verfahrensabläufe programmiert ist. Die Steuer- und Regeleinrichtung 48 empfängt die Signale zahlreicher Sensoren der Werkstückbearbeitungsanlage 10, unter anderem auch der Sensoren 34a-d. Diese werden von der Steuer- und Regeleinrichtung 48 verarbeitet und zur Steuerung unterschiedlicher Komponenten der Werkstückbearbeitungsanlage 10 verwendet. Beispielsweise steuert die Steuer- und Regeleinrichtung 48 die Antriebe des Programmschiebers 20, der Spannzangen 22, des Werkzeugwagens 28 und der auf dem Werkzeugwagen 28 angeordneten Werkzeuge an.

Ferner sind die Teil-Anpresseinrichtungen 18a-e von der Steuer-und Regeleinrichtung 48 individuell ansteuerbar. Insbesondere sind die Antriebe 38a-e und die Federeinrichtungen 42a-d individuell von der Steuer- und Regeleinrichtung 48 ansteuerbar. Durch eine Ansteuerung der Antriebe 38a-e wird dabei eine Anpresskraft einer Teil-Anpresseinrichtung 18a-e auf den Rand 40 individuell für jede Teil-Anpresseinrichtung 18a-e gesteuert oder, beispielsweise über einen in jeder Teil-Anpresseinrichtung 18a-e vorhandenen Kraftsensor, geregelt. Ebenso kann durch eine Ansteuerung der Federeinrichtungen 42a-d die Steifigkeit bzw. Nachgiebigkeit bzw. Weichheit der jeweiligen Federeinrichtung 42a-d individuell eingestellt werden, indem beispielsweise, bei einer Luftfeder, der Pneumatikdruck entsprechend gesteuert oder geregelt wird.

Aus Gründen der Übersichtlichkeit sind der Zuführtisch 12, der Maschinentisch 26, der Entnahmetisch 32, der Pfeil 24 und die Steuer- und Regeleinrichtung 48 nur in Figur 1 gezeichnet, nicht jedoch in den Figuren 2-6. Ferner sind ebenfalls aus Gründen der Übersichtlichkeit in den Figuren 2-6 nicht alle Elemente und Bereiche mit Bezugszeichen versehen.

Nun wird unter Bezugnahme auf die Figuren ein Verfahren zum Betreiben der Werkstückbearbeitungsanlage 10 erläutert:
In einem ersten Arbeitsschritt, der in der Zeichnung nicht dargestellt ist, wird aus einer großformatigen Platte ("Ausgangswerkstück") durch einen sogenannten Längsschnitt das in den Figuren 1-6 gezeigte streifenförmige Werkstück 14 hergestellt. Hierzu kann entweder eine in der Zeichnung nicht gezeichnete Längssäge vorgesehen sein, deren Aufteillinie orthogonal zu der Aufteillinie 30 ist. Diese Längssäge und die in den Figuren gezeichnete Quersäge würden dann eine sogenannte "Winkelanlage" ergeben. Aus dieser Längssäge gelangt das streifenförmige Werkstück 14 dann in einer Richtung quer zur Richtung des Pfeils 24 auf den Zuführtisch 12. Oder der Längsschnitt erfolgt in der in Figur 1 gezeigten Werkstückbearbeitungsanlage 10, und das auf diese Weise hergestellte streifenförmige Werkstück 14 wird nach dem Längsschnitt vom Entnahmetisch 32 über die Aufteillinie 30 hinweg wieder auf den Zuführtisch 12 in die in Figur 1 gezeigte Position transportiert. Dies kann entweder manuell geschehen oder über eine nicht gezeigte Einrichtung, beispielsweise einen Roboter.

Eigenspannungen im Ausgangswerkstück führen nach dem Längsschnitt zu einer Entspannung, die zu einer Verformung des streifenförmigen Werkstücks 14 führt. Diese Verformung ist in den Figuren 1-5 übertrieben dargestellt. Man erkennt, dass der in den Figuren linke Rand 40 von außen gesehen konkav gekrümmt ist, und dass der in den Figuren rechte Rand 36 von außen gesehen konvex gekrümmt ist. Das Werkstück 14 hat also insgesamt eine gekrümmte Form, die bisweilen auch als "Bananenform" bezeichnet wird.

Die gekrümmte Form zumindest des rechten Rands 36 wird durch die Einrichtung 34 und deren Sensoren 34a-d erfasst bzw. ermittelt, und abhängig von den ermittelten Abständen erfolgt dann eine Ansteuerung der individuellen Teil-Anpresseinrichtungen 18a-d durch die Steuer- und Regeleinrichtung 48. Vorliegend höchst beispielhaft werden diese identisch angesteuert, so dass alle vier Teil-Anpresseinrichtungen 18a-d eine gleiche Anpresskraft auf den Rand 40 des Werkstücks 14 ausüben, was in Figur 1 durch identisch lange Pfeile 50a-d zum Ausdruck gebracht wird. Auf diese Weise liegt das Werkstück 14 mit seiner Mitte (in Richtung des Pfeils 24 gesehen) an der Anlageeinrichtung 16 an, wohingegen ein zu den Spannzangen 22 weisender erster Endbereich 52 und ein zur Aufteillinie 30 hin weisender zweiter Endbereich 54 des Rands 36 von der Anlageeinrichtung 16 beabstandet sind.

Wie aus Figur 2 hervorgeht, erfolgt nun eine Ausrichtung des Werkstücks 14 in Richtung des Pfeils 24. Hierzu wird der Ausrichtanschlag 46 nach oben gefahren, so dass er über die Oberseite des Zuführtischs 12 und auch des Maschinentischs 26 übersteht. Dann wird der Programmschieber 20 in Richtung des Pfeils 24 bewegt, und zwar bei geöffneten Spannzangen 22. Hierdurch wird das Werkstück 14 gegen den Ausrichtanschlag 46 beaufschlagt.

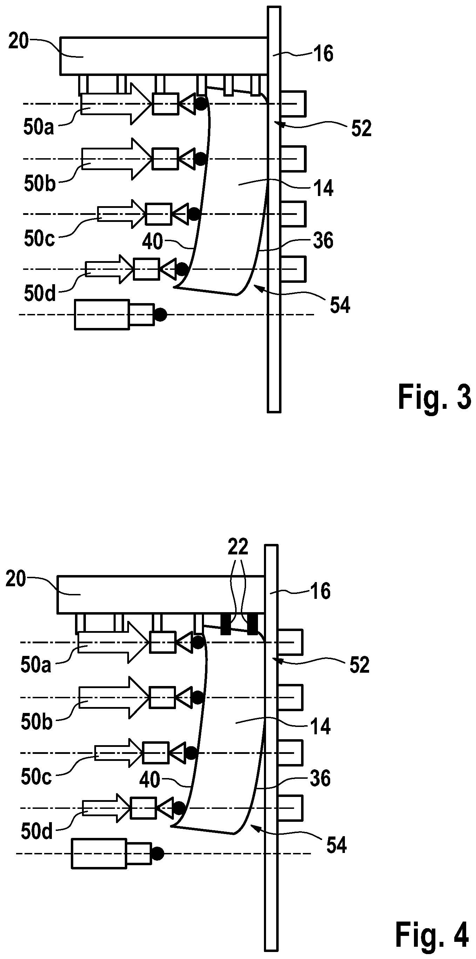

Anschließend wird, wie aus Figur 3 ersichtlich ist, der Ausrichtanschlag 46 wieder unter die Oberseite des Zuführtischs 12 abgesenkt, so dass er im weiteren Verlauf keine Rolle mehr spielt. Die beiden zum ersten Endbereich 52 näher liegenden Teil-Anpresseinrichtung 18a-b bzw. deren Antriebe 38a-b werden nun so angesteuert, dass diese mit einer vergleichsweise großen Anpresskraft 50a und 50b den ersten Endbereich 52 des Werkstücks 14 gegen die Anlageeinrichtung 16 beaufschlagen. Die beiden zum zweiten Endbereich 54 näher liegenden Teil-Anpresseinrichtungen 18c-d bzw. deren Antriebe 38c-d werden dagegen von der Steuer- und Regeleinrichtung 48 so angesteuert, dass diese mit einer vergleichsweise geringen Anpresskraft 50c-d den zweiten Endbereich 54 des Werkstücks 14 gegen die Anlageeinrichtung 16 beaufschlagen.

In der Folge dreht sich das Werkstück 14 um eine senkrecht zur Blattebene von Figur 3 stehende vertikale Achse, so dass es mit dem ersten Endbereich 52 des Rands 36 an der Anlageeinrichtung 16 in Anlage kommt. Bei der vorliegend festgestellten konvexen Form des Rands 36 wird also zuerst der zu den Spannzangen 22 benachbarte erste Endbereich 52 des Werkstücks 14 an die Anlageeinrichtung 16 gedrückt.

Im nächsten Verfahrensschritt, der in Figur 4 gezeigt ist, werden nun die in der Nähe zu dem ersten Endbereich 52 liegenden Spannzangen 22 geschlossen, was in Figur 4 dadurch symbolisiert ist, dass diese Spannzangen 22 flächig schwarz dargestellt sind. Der erste Endbereich 52 wird somit nunmehr von den Spannzangen 22 in einer Richtung quer zur Längsrichtung 24 des Zuführtischs 12 gehalten.

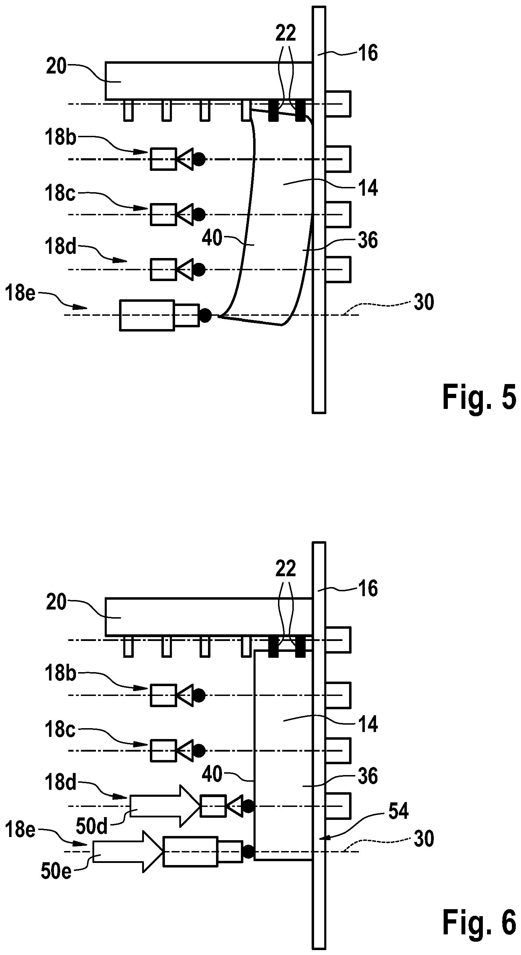

Aus Figur 5 geht hervor, dass nunmehr die Teil-Anpresseinrichtungen 18a-d das Werkstück 14 freigeben, indem diese in Figur 5 nach links gefahren werden (die Teil-Anpresseinrichtung 18a ist in Figur 5 aus Gründen der Übersichtlichkeit nicht gezeichnet). Wie ebenfalls aus Figur 5 hervorgeht, wird das von den Spannzangen 22 im ersten Endbereich 52 gehaltene Werkstück 14 nun durch eine Bewegung des Programmschiebers 20 in Richtung des Pfeils 24 (Figur 1) in Richtung zur Aufteillinie 30 hin bewegt.

In Figur 6 ist dargestellt, dass nun die Teil-Anpresseinrichtung 18d und die am Werkzeugwagen 28 vorhandene Teil-Anpresseinrichtung 18e aktiviert und am linken Rand 40 des Werkstücks 14 in Angriff gebracht werden. Die Teil-Anpresseinrichtungen 18a-c bleiben dagegen deaktiviert und vom Rand 40 beabstandet. Die Teil-Anpresseinrichtungen 18d-e üben nun auf den Rand 40 des Werkstücks 14 eine jeweilige Anpresskraft 50d-e aus, durch die das Werkstück 14 in eine gewünschte Form gebracht wird, nämlich vorliegend "gerade gebogen wird", indem es auch mit dem zweiten Endbereich 54 gegen die Anlageeinrichtung 16 gedrückt wird. Dies ist vorliegend jedoch lediglich beispielhaft, die Teil-Anpresseinrichtung 18d wirkt lediglich unterstützend. Gegebenenfalls könnte dieser Verfahrensschritt auch allein durch die Teil-Anpresseinrichtung 18e am Werkzeugwagen 28 ausgeführt werden. Ist dies geschehen, senkt sich ein in den Figuren nicht gezeichneter Druckbalken auf den zweiten Endbereich 54 ab und verklemmt diesen zwischen dem Druckbalken und dem Maschinentisch 26. Dann werden die beiden Teil-Anpresseinrichtungen 18d-e deaktiviert bzw. nach unten gefahren, und es erfolgt eine Aufteilung längs der Aufteillinie 30.

Weiterhin kann die Nachgiebigkeit der Teil-Anpresseinrichtungen 18a-d relativ zum Antrieb 38a-d gezielt in Abhängigkeit von der Krümmung des Werkstücks 14 bzw. der Form des Werkstücks 14, der Größe des Werkstücks 14 und/oder des Materials des Werkstücks 14 eingestellt bzw. angepasst werden. Um eine optimale Ausrichtung erreichen zu können, sollen die zu der Aufteillinie 30 benachbart angeordneten Teil-Anpresseinrichtungen 18c-d nachgiebiger ("weicher") sein als die Teil-Anpresseinrichtungen 18a-b, die zu den Spannzangen 22 benachbart angeordnet sind.

Insgesamt ist festzuhalten, dass sowohl individuelle die Anpresskraft 50a-e als auch die individuelle Nachgiebigkeit der Federeinrichtungen 42a-d von der Steuer- und Regeleinrichtung 48 gesteuert oder geregelt wird, und zwar abhängig von den mittels der Einrichtung 34 ermittelten Größen, vorliegend beispielhaft also der Abstände des Rands 36 von der Anlageeinrichtung 16. Man kann auch sagen, dass vorliegend die Krümmung des Werkstücks 14 vor bzw. während des Ausrichtvorganges gemessen und der Ausrichtvorgang durch die Anpresseinrichtung 18 in Abhängigkeit von der Krümmung angepasst wird.

In der obigen Beschreibung wurde vom Werkstück 14 immer nur im Singular gesprochen. Tatsächlich könnte es sich beim Werkstück 14 aber auch um einen Werkstückstapel handeln. Ferner wurde oben beispielhaft zu jeder Teil-Anpresseinrichtung 18a-e ein eigener Antrieb 38a-e erwähnt. Möglich ist auch, dass jede Teil-Anpresseinrichtung eine Einrichtung zur Begrenzung der Anpresskraft aufweist. Auch könnten Gruppen von Teil-Anpresseinrichtungen gemeinsame Antriebe haben. Ferner versteht es sich, dass grundsätzlich auch mehr oder weniger Teil-Anpresseinrichtungen und auch mehr oder weniger Sensoren als oben beschrieben eingesetzt werden können. Wichtig ist lediglich, dass eine Mehrzahl von Teil-Anpresseinrichtungen vorgesehen ist, die in Längsrichtung (Pfeil 24) des Zuführtisches 12 gesehen voneinander beabstandet sind und die zumindest zum Teil unabhängig voneinander angesteuert werden können. Im Hinblick auf die Einrichtung 34 ist wichtig, dass auf irgendeine Art und Weise Informationen zur Form des Rands 36 erhalten werden.

Ferner wurde oben eine Ausführungsform beschrieben, bei der der konkav gekrümmte Rand 40 von der Anlageeinrichtung 16 entfernt angeordnet ist, so dass die Teil-Anpresseinrichtungen 18a-e direkt an diesem Rand 40 angreifen. Denkbar wäre auch eine Ausgestaltung, bei der der konkav gekrümmte Rand 40 zur Anlageeinrichtung 16 weist, so dass die Teil-Anpresseinrichtungen 18a-e am - aus Sicht der Teil-Anpresseinrichtungen 18a-e - konvexen Rand 36 angreifen würden. Bei dieser Ausgestaltung wäre es sogar denkbar, dass im Bereich des Zuführtischs nur eine einzige Teil-Anpresseinrichtung vorgesehen ist, die beispielsweise in der in Längsrichtung gesehenen Mitte des Werkstücks angreift und dieses gegen die Anlageeinrichtung presst und auf diese Weise das Werkstück in eine gewünschte bzw. vordefinierte Form bringt, insbesondere gerade drückt.

## Patentansprüche

1. Werkstückbearbeitungsanlage (10), insbesondere Plattenaufteilanlage, mit einem Zuführtisch (12) mit einer Längsrichtung (24), einer seitlich vom Zuführtisch (12) angeordneten Anlageeinrichtung (16), und mindestens einer im Bereich des Zuführtisches (12) angeordneten Ausrichteinrichtung (18), mit der mindestens ein Bereich eines auf dem Zuführtisch (12) liegenden Werkstücks (14) an der Anlageeinrichtung (16) ausgerichtet werden kann, **dadurch gekennzeichnet, dass** die im Bereich des Zuführtisches (12) angeordnete Ausrichteinrichtung (18) mindestens eine Teil-Anpresseinrichtung (18a-e) umfasst, die abhängig von einer aktuellen Größe ansteuerbar ist.

2. Werkstückbearbeitungsanlage (10) nach Anspruch 1, **dadurch gekennzeichnet, dass** die Ausrichteinrichtung (18) zwei in Längsrichtung (24) des Zuführtisches (12) voneinander beabstandete Teil-Anpresseinrichtungen (18a-e) umfasst, die abhängig von einer aktuellen Größe individuell ansteuerbar sind.

3. Werkstückbearbeitungsanlage (10) nach wenigstens einem der vorhergehenden Ansprüche, **dadurch gekennzeichnet, dass** sie eine Einrichtung (34) zur Ermittlung einer Größe aufweist, die einen Rand (36) eines auf dem Zuführtisch (12) liegenden Werkstücks (14) charakterisiert, und dass die Ansteuerung mindestens einer Teil-Anpresseinrichtungen (18a-e) von der ermittelten Größe abhängt.

4. Werkstückbearbeitungsanlage (10) nach Anspruch 3, **dadurch gekennzeichnet, dass** die Einrichtung (34) zur Ermittlung der Größe im Bereich der Anlageeinrichtung (16) und/oder des Zuführtisches (12) angeordnet ist.

5. Werkstückbearbeitungsanlage (10) nach wenigstens einem der vorhergehenden Ansprüche, **dadurch gekennzeichnet, dass** mindestens eine Teil-Anpresseinrichtung (18e) im Bereich eines Maschinentisches (26) angeordnet ist.

6. Werkstückbearbeitungsanlage (10) nach wenigstens einem der vorhergehenden Ansprüche 2-5, **dadurch gekennzeichnet, dass** mindestens eine Teil-Anpresseinrichtung (18a-e) einen von einer anderen Teil-Anpresseinrichtung (18a-e) unabhängigen Antrieb (38a-e) umfasst.

7. Werkstückbearbeitungsanlage (10) nach wenigstens einem der vorhergehenden Ansprüche, **dadurch gekennzeichnet, dass** mindestens eine Teil-Anpresseinrichtung (18a-d) eine Nachgiebigkeitseinrichtung (42a-d) aufweisen, und dass mindestens eine Nachgiebigkeit der Nachgiebigkeitseinrichtung (42a-d) gesteuert einstellbar ist.

8. Verfahren zum Betreiben einer Werkstückbearbeitungsanlage (10) nach einem der vorhergehenden Ansprüche, **dadurch gekennzeichnet, dass** es folgende Schritte umfasst:
a. Ermitteln einer individuellen Ansteuergröße für mindestens eine Teil-Anpresseinrichtung (18a-e) abhängig von einer aktuellen Größe, die insbesondere eine Eigenschaft eines aktuell auf dem Zuführtisch liegenden Werkstücks (14) charakterisiert;
b. Ansteuern der Teil-Anpresseinrichtung (18a-e) mit der ermittelten Ansteuergröße.

9. Verfahren nach Anspruch 8, **dadurch gekennzeichnet, dass** die Größe einen Rand (36) und/oder ein Material und/oder Abmessungen eines auf dem Zuführtisch (12) liegenden Werkstücks (14) charakterisiert.

10. Verfahren nach wenigstens einem der Ansprüche 8-9, **dadurch gekennzeichnet, dass** die Ansteuergröße eine Anpresskraft und/oder eine Endposition und/oder eine Nachgiebigkeit der Teil-Anpresseinrichtung (18a-e) beeinflusst.

11. Verfahren nach wenigstens einem der Ansprüche 8-10, **dadurch gekennzeichnet, dass** es ferner folgende Schritte umfasst:
c. Beaufschlagen des auf dem Zuführtisch (12) liegenden Werkstücks (14) mindestens in einem ersten Bereich (52) mittels mindestens einer ersten Teil-Anpresseinrichtung (18a-b) gegen die Anlageeinrichtung (16), so dass der erste Bereich (52) an der Anlageeinrichtung (16) anliegt;
d. Festlegen des ersten Bereichs (52) des Werkstücks (14) mindestens in einer Richtung quer zu einer Längsrichtung (24) des Zuführtischs (12) mittels einer Festlegeeinrichtung (22);
e. Beaufschlagen eines von dem ersten Bereich (52) in Längsrichtung (24) des Zuführtisches (12) gesehen entfernt liegenden zweiten Bereichs (54) des Werkstücks (14) mittels mindestens einer zweiten Teil-Anpresseinrichtung (18d-e) gegen die Anlageeinrichtung (16), so dass der zweite Bereich (54) an der Anlageeinrichtung (16) anliegt.

12. Verfahren nach Anspruch 11, **dadurch gekennzeichnet, dass** der erste Bereich ein erster Endbereich (52) und der zweite Bereich ein zu diesem entgegengesetzter zweiter Endbereich (54) ist.

13. Verfahren nach Anspruch 12, **dadurch gekennzeichnet, dass** im Schritt c mindestens zwei erste Teil-Anpresseinrichtungen (18a-b) eingesetzt werden, und dass die Anpresskraft (50a-b) der zum ersten Endbereich (52) näher liegenden ersten Teil-Anpresseinrichtung (18a-b) größer ist als die Anpresskraft (50c-d) der vom ersten Endbereich (52) weiter weg liegenden ersten Teil-Anpresseinrichtung (18c-d).

14. Verfahren nach wenigstens einem der Ansprüche 11-13, **dadurch gekennzeichnet, dass** es nach dem Schritt e zusätzlich folgenden Schritt umfasst:
f. Festlegen des zweiten Bereichs (54) mindestens in einer Richtung quer zur Längsrichtung (24) des Zuführtischs (12).

15. Verfahren nach wenigstens einem der Ansprüche 11-14, **dadurch gekennzeichnet, dass** zwischen den Schritten c und d die Teil-Anpresseinrichtungen (18a-e) das Werkstück (14) freigegeben und das Werkstück (14) in Längsrichtung (24) des Zuführtisches (12) in Richtung zu einer Bearbeitungseinrichtung (28) bewegt wird

## Claims

1. Workpiece processing system (10), in particular panel dividing system, comprising a feed table (12) having a longitudinal direction (24), a contact device (16) arranged laterally from the feed table (12), and at least one alignment device (18) arranged in the region of the feed table (12), with which alignment device at least one region of a workpiece (14) lying on the feed table (12) can be aligned on the contact device (16), **characterized in that** the alignment device (18) arranged in the region of the feed table (12) comprises at least one partial pressing device (18a-e) which is controllable depending on a current variable.

2. Workpiece processing system (10) according to claim 1, **characterized in that** the alignment device (18) comprises two partial pressing devices (18a-e) which are spaced apart from one another in the longitudinal direction (24) of the feed table (12) and are individually controllable depending on a current variable.

3. Workpiece processing system (10) according to at least one of the preceding claims, **characterized in that** it has a device (34) for determining a variable which characterizes an edge (36) of a workpiece (14) lying on the feed table (12), and **in that** the control of at least one partial pressing device (18a-e) depends on the determined variable.

4. Workpiece processing system (10) according to claim 3, **characterized in that** the device (34) for determining the variable is arranged in the region of the contact device (16) and/or the feed table (12).

5. Workpiece processing system (10) according to at least one of the preceding claims, **characterized in that** at least one partial pressing device (18e) is arranged in the region of a machine table (26).

6. Workpiece processing system (10) according to at least one of the preceding claims 2-5, **characterized in that** at least one partial pressing device (18a-e) comprises a drive (38a-e) which is independent of another partial pressing device (18a-e).

7. Workpiece processing system (10) according to at least one of the preceding claims, **characterized in that** at least one partial pressing device (18a-d) has a compliance device (42a-d), and **in that** at least one compliance of the compliance device (42a-d) is adjustable in a controlled manner.

8. Method for operating a workpiece processing system (10) according to any of the preceding claims, **characterized in that** it comprises the following steps:
a. determining an individual control variable for at least one partial pressing device (18a-e) depending on a current variable, which in particular characterizes a property of a workpiece (14) currently lying on the feed table;
b. controlling the partial pressing device (18a-e) with the determined control variable.

9. Method according to claim 8, **characterized in that** the variable characterizes an edge (36) and/or a material and/or dimensions of a workpiece (14) lying on the feed table (12).

10. Method according to at least one of claims 8-9, **characterized in that** the control variable influences a pressing force and/or an end position and/or a compliance of the partial pressing device (18a-e).

11. Method according to at least one of claims 8-10, **characterized in that** said method further comprises the following steps:
c. pressing the workpiece (14) lying on the feed table (12) at least in a first region (52) by means of at least one first partial pressing device (18a-b) against the contact device (16), such that the first region (52) rests against the contact device (16) ;
d. fixing the first region (52) of the workpiece (14) at least in a direction transverse to a longitudinal direction (24) of the feed table (12) by means of a fixing device (22);
e. pressing a second region (54) of the workpiece (14), which second region is spaced apart from the first region (52) viewed in the longitudinal direction (24) of the feed table (12), against the contact device (16) by means of at least one second partial pressing device (18d-e), such that the second region (54) rests against the contact device (16) .

12. Method according to claim 11, **characterized in that** the first region is a first end region (52) and the second region is a second end region (54) opposite thereto.

13. Method according to claim 12, **characterized in that** in step c at least two first partial pressing devices (18a-b) are used, and **in that** the pressing force (50a-b) of the first partial pressing device (18a-b) lying close to the first end region (52) is larger than the pressing force (50c-d) of the first partial pressing device (18c-d) lying further away from the first end region (52).

14. Method according to at least one of claims 11-13, **characterized in that** it additionally comprises the following step after step e:
f. fixing the second region (54) at least in a direction transverse to the longitudinal direction (24) of the feed table (12).

15. Method according to at least one of claims 11-14, **characterized in that** between steps c and d, the partial pressing devices (18a-e) release the workpiece (14) and the workpiece (14) is moved in the longitudinal direction (24) of the feed table (12) in the direction of a processing device (28).

## Revendications

1. Installation de traitement de pièces (10), en particulier installation à diviser des panneaux, comprenant une table d'alimentation (12) ayant une direction longitudinale (24), un dispositif d'appui (16) qui est disposé latéralement par rapport à la table d'alimentation (12) et au moins un dispositif d'alignement (18) qui est disposé au niveau de la table d'alimentation (12) et au moyen duquel au moins une zone d'une pièce (14) se trouvant sur la table d'alimentation (12) peut être alignée sur le dispositif d'appui (16), **caractérisée par le fait que** le dispositif d'alignement (18) disposé au niveau de la table d'alimentation (12) comprend au moins un dispositif partiel de pression (18a-e) qui peut être commandé en fonction d'une grandeur actuelle.

2. Installation de traitement de pièces (10) selon la revendication 1, **caractérisée par le fait que** le dispositif d'alignement (18) comprend deux dispositifs partiels de pression (18a-e) qui sont espacés l'un de l'autre dans la direction longitudinale (24) de la table d'alimentation (12) et qui peuvent être commandés individuellement en fonction d'une grandeur actuelle.

3. Installation de traitement de pièces (10) selon au moins l'une des revendications précédentes, **caractérisée par le fait qu'**il comprend un dispositif (34) pour déterminer une grandeur qui caractérise un bord (36) d'une pièce (14) se trouvant sur la table d'alimentation (12), et que la commande d'au moins un dispositif partiel de pression (18a-e) dépend de la grandeur déterminée.

4. Installation de traitement de pièces (10) selon la revendication 3, **caractérisée par le fait que** le dispositif (34) destiné à déterminer la grandeur est disposé au niveau du dispositif d'appui (16) et/ou de la table d'alimentation (12).

5. Installation de traitement de pièces (10) selon au moins l'une des revendications précédentes, **caractérisée par le fait qu'**au moins un dispositif partiel de pression (18e) est disposé au niveau d'une table de machine (26).

6. Installation de traitement de pièce (10) selon au moins l'une des revendications précédentes 2 à 5, **caractérisée par le fait qu'**au moins un dispositif partiel de pression (18a-e) comprend un entraînement (38a-e) indépendant d'un autre dispositif partiel de pression (18a-e).

7. Installation de traitement de pièces (10) selon au moins l'une des revendications précédentes, **caractérisée par le fait qu'**au moins un dispositif partiel de pression (18a-d) comprend un dispositif de flexibilité (42a-d), et qu'au moins une flexibilité du dispositif de flexibilité (42a-d) peut être réglée de manière commandée.

8. Procédé destiné à faire fonctionner une installation de traitement de pièces (10) selon l'une quelconque des revendications précédentes, **caractérisé par le fait qu'**il comprend les étapes suivantes consistant à:
a. déterminer une grandeur de commande individuelle pour au moins un dispositif partiel de pression (18a-e) en fonction d'une grandeur actuelle qui caractérise en particulier une propriété d'une pièce (14) se trouvant actuellement sur la table d'alimentation;
b. commander le dispositif partiel de pression (18a-e) en utilisant la grandeur de commande déterminée.

9. Procédé selon la revendication 8, **caractérisé par le fait que** la grandeur caractérise un bord (36) et/ou un matériau et/ou des dimensions d'une pièce (14) se trouvant sur la table d'alimentation (12).

10. Procédé selon au moins l'une des revendications 8 à 9, **caractérisé par le fait que** la grandeur de commande influence une force de pression et/ou une position finale et/ou une flexibilité du dispositif partiel de pression (18a-e).

11. Procédé selon l'une quelconque des revendications 8 à 10, **caractérisé par le fait qu'**il comprend en outre les étapes suivantes consistant à:
c. appliquer la pièce (14) se trouvant sur la table d'alimentation (12) contre le dispositif d'appui (16) au moins dans une première zone (52) au moyen d'au moins un premier dispositif partiel de pression (18a-b) de sorte que la première zone (52) s'applique contre le dispositif d'appui (16);
d. fixer la première zone (52) de la pièce (14) au moins dans une direction transversale à une direction longitudinale (24) de la table d'alimentation (12) au moyen d'un dispositif de fixation (22);
e. appliquer une deuxième zone (54) de la pièce (14), qui est éloignée de la première zone (52), vue dans la direction longitudinale (24) de la table d'alimentation (12), au moyen d'au moins un deuxième dispositif partiel de pression (18d-e) contre le dispositif d'appui (16) de sorte que la deuxième zone (54) s'applique contre le dispositif d'appui (16).

12. Procédé selon la revendication 11, **caractérisé par le fait que** la première zone est une première zone d'extrémité (52) et la deuxième zone est une deuxième zone d'extrémité (54) opposée à celle-ci.

13. Procédé selon la revendication 12, **caractérisé par le fait qu'**à l'étape c au moins deux premiers dispositifs partiels de pression (18a-b) sont utilisés, et que la force de pression (50a-b) du premier dispositif partiel de pression (18a-b) qui est situé plus proche de la première zone d'extrémité (52) est supérieure à la force de pression (50c-d) du premier dispositif partiel de pression (18c-d) qui est plus éloigné de la première zone d'extrémité (52).

14. Procédé selon au moins l'une des revendications 11 à 13, **caractérisé par le fait qu'**il comprend en outre l'étape suivante après l'étape e:
f. fixer la deuxième zone (54) au moins dans une direction transversale à la direction longitudinale (24) de la table d'alimentation (12).

15. Procédé selon au moins l'une des revendications 11 à 14, **caractérisé par le fait que**, entre les étapes c et d, les dispositifs partiels de pression (18a-e) libèrent la pièce (14) et la pièce (14) est déplacée dans la direction longitudinale (24) de la table d'alimentation (12) vers un dispositif de traitement (28) .
